(19) Europäisches Patentamt
European Patent Office
Office européen des brevets

(11) EP 1 331 753 A2

(12) EUROPEAN PATENT APPLICATION

(43) Date of publication:
**30.07.2003 Bulletin 2003/31**

(51) Int Cl.[7]: **H04L 9/32**

(21) Application number: **02258584.8**

(22) Date of filing: **12.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: **29.01.2002 US 59946**

(71) Applicant: **Avaya Technology Corp.**
**Basking Ridge, NJ 07920 (US)**

(72) Inventors:
- **Nadooshan, Mehrdad**
  **Holmdel, New Jersey 07733 (US)**
- **Ren, Jian**
  **Middletown, New Jersey 07748 (US)**

(74) Representative: **Williams, David John et al**
**Page White & Farrer,**
**54 Doughty Street**
**London WC1N 2LS (GB)**

# (54) Method and apparatus for simultaneously establishing user identity and group membership

(57) A method and apparatus are disclosed for simultaneously establishing a user's identity and membership in multiple groups, using only a single identification card (or computer file). In a registration or enrollment phase, secret information is created between the user and any groups for which the user has registered. Once the user has been registered with one or more groups, the user may be authenticated to a verification agent to obtain access to one or more selected groups by providing an encrypted authentication request based on public identifiers relating to one or more groups, and an exponential function based on private identifiers and several randomly generated numbers. The verification agent is able to verify the user's registration with the selected groups without knowing the secret information. Optionally, for additional reliability, the verification agent may request the user to repeat the authentication process multiple times, each time altering one of the random numbers. Once verification is complete, the verification agent arranges for the user to access the selected groups. Significantly, the user is able to authenticate itself with multiple groups by carrying out a single authentication sequence.

*FIG. 2*

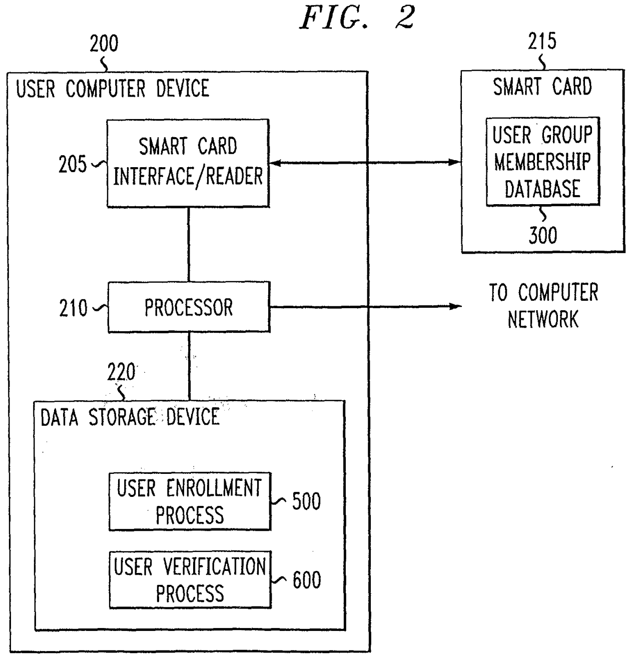


EP 1 331 753 A2

Printed by Jouve, 75001 PARIS (FR)

## Description

The present invention relates generally to user authentication techniques, and more particularly, to methods and apparatus that establish the identity of a user and the membership of the user in multiple groups.

Individuals must often deal with many different groups or organizations, such as credit card companies, insurance companies, banks and online retailers, when performing basic tasks and transactions. Since such tasks and transactions often involve confidential or proprietary information, individuals typically must first authenticate their identity to a particular group or organization before performing a desired task. Typically, each group provides a user with an identification card containing the user's account information. The identification card optionally has an associated personal identification number (PIN) that provides some additional security. The identification card serves to identify the user and establish the user's membership or affiliation with the particular group or organization.

As a user deals with an increasing number of groups or organizations, however, the number of corresponding identification cards and PINs that must be managed by the user quickly becomes impractical. In addition, conventional identification cards typically do not contain built-in security or encryption features to protect the stored information. Thus, conventional identification cards provide only a limited amount of security protection. In the event of theft or loss of an identification card, the user is generally responsible for any incurred losses. Finally, conventional identification cards are not well suited for identifying a user over a computer network, such as the Internet. A need therefore exists for an authentication scheme that allows a user to establish their identity and membership in multiple groups using only a single identification card.

Generally, a method and apparatus are disclosed for establishing a user's identity and membership in multiple groups. According to one aspect of the invention, the identity of a user and the membership of the user in multiple groups are simultaneously established using only a single identification card (or computer file). In a registration or enrollment phase, secret information is created between the user and any groups for which the user has registered. The user can conveniently store the secret information for multiple groups in a single smart card or computer file. Thus, the user does not have to carry multiple identification cards or remember a number of PINs. A smart card implementation of the present invention protects the information stored in the smart card using the access control and tamperproof technologies provided by the smart card technology itself. When used in a network environment, the present invention provides strong authentication for a single-sign-on to multiple protected systems, such as service logins and administration logins.

Once the user has been registered with one or more groups, the user may be authenticated to a verification agent to obtain access to one or more selected groups by providing an encrypted authentication request based on public identifiers relating to one or more groups, and an exponential function based on private identifiers and several randomly generated numbers. The verification agent is able to verify the user's registration with the selected groups without knowing the secret information. Optionally, for additional reliability, the verification agent may request the user to repeat the authentication process multiple times, each time altering one of the random numbers. Once verification is complete, the verification agent arranges for the user to access the selected groups. Significantly, the user is able to authenticate itself with multiple groups by carrying out a single authentication sequence.

The present invention establishes the identity of a user and the membership of the user in multiple groups using a single operation based on the El Gomal public-key algorithm. The identity of the user and the user's membership in one or more groups with which the user has registered are verified if:

$$G^{G} g^{V(r,s)} \stackrel{?}{=} \prod_{i=1}^{l} ID_i g^{r} \text{ , mod p.}$$

where the user is identified by an identifier, $ID_i$, equal to $g^{x_i h}$ mod p, the one or more groups are identified by an identifier, $G_i$, equal to $g^{k_i h}$ ,

$$V(r,s)=\sum_{i=1}^{l} s_i + r \text{ , r}$$

is a randomly selected wrap value, p, g and $x_i$ are randomly generated numbers, h is a hash function on a random number concatenated with user information and $s_i$ is obtained as follows:

$$s_i = x_i h - k_i hG \bmod(p-1).$$

The present invention can be used in a hand-held computing device with wireless capabilities to support secure wireless Internet shopping at any location. For a stand-alone personal computer user, the present invention allows the user to store all the information in a computer file, such as a digital wallet, thereby making electronic transactions straightforward and secure.

A more complete understanding of the present invention, as well as further features and advantages of the present invention, will be obtained by reference to the following detailed description and drawings.

FIG. 1 is a schematic block diagram illustrating an exemplary network environment where the present invention can operate;

FIG. 2 is a schematic block diagram showing the architecture of an exemplary user computer device of FIG. 1;

FIG. 3 is a sample table from an exemplary user group membership database of FIG. 2;

FIG. 4 is a schematic block diagram showing the architecture of an exemplary group computer device of FIG. 1;

FIG. 5 is a flow chart describing an exemplary implementation of a user enrollment process incorporating features of the present invention; and

FIG. 6 is a flow chart describing an exemplary implementation of a user verification process incorporating features of the present invention.

FIG. 1 illustrates an exemplary network environment 100 where the present invention can operate. As shown in FIG. 1, a user employing a user computer device 200, discussed below in conjunction with FIG. 2, attempts to contact one or more groups employing group computer devices 400-1 through 400-N (hereinafter, collectively, groups 400), discussed below in conjunction with FIG. 4, over a network 110. According to one aspect of the invention, the user establishes his or her identity and membership to multiple groups 400 simultaneously using only a single identification card. Thus, the present invention simultaneously verifies a user's identity and his or her membership with any groups for which the user has registered. In this manner, the user does not have to carry multiple identification cards and remember a number of PINs. The authentication scheme of the present invention can be implemented, for example, in a smart card or a computer file associated with each user. One benefit of a smart card implementation is that the information stored in the smart card can be protected by the access control and tamperproof technologies provided by the smart card technology itself. When used in a network environment, the present invention provides strong authentication for a single sign-on to multiple protected systems, such as service logins and administration logins.

FIG. 2 is a schematic block diagram showing the architecture of an exemplary user computer device 200. The user computer device 200 may be embodied as a general purpose computing system, such as the general purpose computing system shown in FIG. 2. The user computer device 200 includes a processor 210 and related memory, such as a data storage device 220, which may be distributed or local. The data storage device 220 could be implemented as an electrical, magnetic or optical memory, or any combination of these or other types of storage devices. Moreover, the term "memory" should be construed broadly enough to encompass any information able to be read from or written to an address in the addressable space accessed by processor 210. With this definition, information on a network is still within memory 220 because the processor 210 can retrieve the information from the network. The processor 210 may be embodied as a single processor, or a number of local or distributed processors operating in parallel. The data storage device 220 and/or a read only memory (ROM) are operable to store one or more instructions, which the processor 210 is operable to retrieve, interpret and execute.

In a smart card implementation, the user computer device 200 includes a smart card interface/reader 205 for reading data from a user's smart card 215. The smart card interface/reader 205 may be compliant, for example, with specifications for the Windows™ 2000 smart card interface. As shown in FIG. 2 and discussed further below in conjunction with FIG. 3, the smart card 215 includes a user group membership database 300 that records information for each group to which a user is registered. In an alternate implementation, the user group membership database 300 may be stored as a computer file, for example, in the data storage device 220.

As shown in FIG. 2, and discussed further below in conjunction with FIGS. 5 and 6, respectively, the data storage device 220 of each user computer device 200 contains portions of a user enrollment process 500 and a user verification process 600 performed on a user side of a transaction. As discussed further below, portions of the user enrollment process 500 and user verification process 600 are also performed on a group side of a transaction. Generally, the user enrollment process 500 allows a user to register with one or more groups 400. The user verification process 600 allows a user to establish his or her identity and membership to one or more groups 400 simultaneously using personal information retrieved from the smart card 215 or a computer file.

FIG. 3 is a sample table from an exemplary user group membership database 300. As previously indicated, the user group membership database 300 records information for each group to which a user is registered. As shown in FIG. 3, the user group membership database 300 includes a plurality of records, such as records 301-305, each associated with a different group. For each group identified in field 320, the user group membership database 300 records the values of the group-specific variables $x_i$, G, and $s_i$ in records 325 through 335, respectively. In addition, the user group membership database 300 includes values of h, G, S, p and g. As discussed further below, the values $ID_i$ and $S_i$ can be derived from g, $x_i$, h and g, $s_i$. The particular values stored in the exemplary user group membership database 300 are discussed further below, in a section entitled "Authentication Algorithms."

FIG. 4 is a schematic block diagram showing the architecture of an exemplary group computer device 400. The group computer device 400 may be embodied as a general purpose computing system, such as the general purpose computing system shown in FIG. 4. The group computer device 400 includes a processor 410 and related memory, such as a data storage device 420, which may be distributed or local. The processor 410 may be embodied as a single processor, or a number of local or distributed processors operating in parallel. The data storage device 420 and/or a read only memory (ROM) are operable to store one or more instructions, which the processor 410 is operable to retrieve, interpret and execute.

As shown in FIG. 4, and discussed further below in conjunction with FIGS. 5 and 6, respectively, the data storage device 420 of each group computer device 400 contains portions of the user enrollment process 500 and user verification process 600 as performed on the group side of a transaction. As previously indicated, the user enrollment process 500 allows a user to register with one or more groups 400. The user verification process 600 allows a user to establish his or her identity and membership to one or more groups 400 simultaneously using personal information retrieved from the smart card 215 or a computer file.

## AUTHENTICATION ALGORITHMS

As discussed hereinafter, in accordance with the present invention, each user is assigned an identification number, ID, and can register with one or more groups 400 and become a member. Assume that p is a large prime integer, and g is a randomly selected primitive element of a set of numbers, GF(p), composed of {0, 1, ... p-1} with algebraic operations on it.

### User Enrollment

FIG. 5 is a flow chart describing an exemplary implementation of the user enrollment process 500 incorporating features of the present invention. As previously indicated, the user enrollment process 500 is an interactive process executed by the user computer device 200 and one or more group computer devices 400 to allow a user to register with one or more groups 400.

Suppose $G_1, G_2, \cdots, G_l$ are the *l* groups that the user, U, wants to register with and become a member. In order to register, user U initially selects *l* random integers $x_i$ from {1, p-1} with respect to each group $G_i$ and calculates the registration identification defined by:

$$ID_i = g^{x_i h} \text{ mod } p, \qquad (1)$$

where g is the prime integer selected in the manner described above, h is a hash function applied on the user information concatenated with a random integer such that h contains enough information pertaining to user U and enough random information that cannot be forged and reused.

Meanwhile, to register with group $G_i$, $G_i$ initially selects a random integer $k_i$ and calculates the group identifier as follows:

$$G_i = g^{k_i h} \text{ mod } p, \qquad (2)$$

where $g^h$ mod p should be provided by U.

Thereafter, during step 1, the user, U, sends the registration identification value, $ID_i$, calculated from equation (1) to group $G_i$. Group G sends, $G_i^{x_i} x_i$ mod p, to the user during step 2.

Since both U and $G_i$ can calculate

$$G_i^{x_i} = g^{k_i h x_i} = ID_i^{k_i} \text{ mod } p,$$

Both G and U have the shared secret $g^{k_i h x_i}$ mod p. Group $G_i$ can calculate $x_i$ from $G_i^{x_i} x_i$ mod p, using the Euclid algorithm.

If User U is to register to multiple groups, say $G_1, G_2, \cdots, G_l$,

then define

$$G = \prod_{i=1}^{l} G_i \qquad (3)$$

Group $G_i$ calculates

$$s_i = x_i h - k_i h G \bmod (p-1) \qquad (4)$$

The registration identifier is created during step 3. The group sends $ID_i^{k_i} s_i$ mod p to the user, U. Thereafter, both the user, U, and the group, G, have the registration information ($G_i$, $S_i$), where $S_i$ equals $g^{s_i}$. $G_i$ is made public and $s_i$ is kept private. User U can recover $s_i$ using the Euclid algorithm.
The registration can be verified through the following equation:

$$ID_i = G_i^G S_i \bmod p, \qquad (5)$$

since

$$G_i^G S_i = g^{k_i hG} g^{S_i} \bmod p$$
$$= g^{k_{ii} hG = s_i} \bmod p$$
$$= g^{x_i h} \bmod p$$
$$= ID_i$$

For group verification, the user U calculates S from the following equation:

$$S \stackrel{\Delta}{=} \prod_{i=1}^{l} S_l \qquad (6)$$

Group registration is:

$$(G,S) \qquad (7)$$

This can be verified through the following equation:

$$\prod_{i}^{l} ID_i = G^G S \bmod p \qquad (8)$$

which can be derived by multiplying the *l* equations in equation (5).

VERIFICATIONS

FIG. 6 is a flow chart describing an exemplary implementation of the user verification process 600 incorporating features of the present invention. As previously indicated, the user verification process 600 is an interactive process executed by the user computer device 200 and one or more group computer devices 400 to establish a user's identity and membership to one or more groups simultaneously using personal information retrieved from the smart card 215 or a computer file. It is noted that in the exemplary implementation shown in FIG. 6, a verifier/trusted broker 610 serves as an intermediary between the user computer device 200 and the group computer device 400. It is noted, however, that the functionality provided by the verifier/trusted broker 610 can be incorporated into the user computer device 200, the group computer device 400 or an alternate machine, as would be apparent to a person of ordinary skill in the art. To verify that User U is a member of a subgroup of $G_1, G_2, \cdots, G_l$, without the loss of generality, it is assumed that U is a member of groups $G_1, G_2, \cdots, G_t$, where $t \leq l$. User U needs to prove to the verifier/trusted broker 610 for possession of the information $s_1, s_2, \cdots, s_t$ , and that this information matches User U's ID through the equations described above.

As shown in FIG. 6, the User U selects a random integer (wrap) *r* during step 1 from {1, p-1} and sends the wrapped information, V(r, s) to the verifier/trusted broker 610, where:

$$V(r,s)=\sum_{i=1}^{l} s_i+r ,$$

During step 2, the User U sends $g^r$ mod p to the verifier/trusted broker 610.

The verifier/trusted broker 610 then verifies whether the following equation is valid during step 3:

$$G^G g^{V(r,s)} \stackrel{?}{=} \prod_{i=1}^{l} ID_i g^r \text{ , mod p.} \qquad (9)$$

If equation (9) is true, then U will be a legitimate user, otherwise, U is not a legitimate user. This verification process can be repeated several times. If the verifier/trusted broker 610 succeeds in each verification, then U will be a legitimate user, otherwise, U will not be a legitimate user. It is noted that to prevent "play-back" attacks, r may be required to contain the time-stamp of each verification.

SECURITY ANALYSIS

The analysis of the security system is based on the following facts:

1. The overall security of this system is based on the El Gomal public-key algorithm, and, therefore, it is secure.
2. To successfully forge one registration or multiple registrations of a user, U, the attacker needs to know some $s_i$'s. From Step 1 of the user verification process 600 described in conjunction with FIG. 6, the attackers can calculate

$$g^{V(r,s)}, \text{ mod p,}$$

while from Step 2, the attackers receive $g^r$ mod p. When combined together, the attackers can get

$$g^{\sum_{i=1}^{l} s_i} \text{ , mod p.}$$

There is no way of knowing, however:

$$\sum_{i=1}^{t} s_i, \text{mod}\,(p-1),$$

since this value requires the solution of a difficult discrete logarithm problem.
3. The registration process can be verified through the Diffle-Hellman public-key algorithm before the user, U, discloses any of the $x_i$, h information to a group $G_i$. This can be used to secure the user enrollment process 500.

4. In reality, if a user U does not want to disclose any of the $x_i$, h information to group Gi, then the calculation of $s_i$ and $S_i$ should be done without disclosing User U's information.

IMPLEMENTATION

As previously indicated, $ID_i$ and $S_i$ can be derived from g, $x_i$, h and g, $s_i$, stored in the user group membership database 300 (FIG. 3). In one implementation, all the values stored in the user group membership database 300 are 1024 bits (128 bytes) long and the space required for data storage is 1024 bytes. If a user uses smart card 215 with 32K bytes storage space, up to 83 groups can be registered on the smart card 215. This would be enough to meet the needs of most users to replace all individual identification cards with a single smart card, or electronic file. In a smart card implementation, extra security protections can be provided from the card access protection and tamper-proof technologies. Therefore, even if a card is lost or stolen, the user's information is still secured. For an electronic file implementation, a protected system can be used for access control and security management.

The present invention can also be used in a hand-held computing device with wireless capabilities to support secure wireless Internet shopping at any location. For a home PC user, the present invention allows the user to store all the information in a digital wallet and makes Internet shopping and electronic fund transfer easy and secure.

As is known in the art, the methods and apparatus discussed herein may be distributed as an article of manufacture that itself comprises a computer readable medium having computer readable code means embodied thereon. The computer readable program code means is operable, in conjunction with a computer system, to carry out all or some of the steps to perform the methods or create the apparatuses discussed herein. The computer readable medium may be a recordable medium (e.g., floppy disks, hard drives, compact disks, or memory cards) or may be a transmission medium (e.g., a network comprising fiber-optics, the world-wide web, cables, or a wireless channel using time-division multiple access, code-division multiple access, or other radiofrequency channel). Any medium known or developed that can store information suitable for use with a computer system may be used. The computer-readable code means is any mechanism for allowing a computer to read instructions and data, such as magnetic variations on a magnetic media or height variations on the surface of a compact disk.

It is to be understood that the embodiments and variations shown and described herein are merely illustrative of the principles of this invention and that various modifications may be implemented by those skilled in the art without departing from the scope and spirit of the invention.

**Claims**

**1.** A computer-implemented method for authenticating a user to one or more groups, said method comprising the steps of:

computationally verifying an identity of said user; and
computationally verifying a membership of said user with said one or more groups, wherein said verifying computations are performed substantially simultaneously using user information stored in a computer file associated with said user.

**2.** The method of claim 1, further comprising the step of registering said user with at least one of said one or more groups.

**3.** The method of claim 2, wherein said registering step further comprises the step of said user and said at least one of said one or more groups exchanging a respective identifier.

**4.** The method of claim 3, wherein said user identifier is expressed as follows:

$$ID_i = g^{x_i h} \bmod p,$$

where g and $x_i$ are randomly generated numbers, and h is a hash function on a random number concatenated with information of said user, U.

**5.** The method of claim 3, wherein said identifier of said at least one of said one or more groups is expressed as follows:

$$G_i = g^{k_i h} \bmod p,$$

where g and $k_i$ are randomly generated numbers, and h is a hash function on a random number concatenated with information of said user, U.

**6.** The method of claim 2, wherein said registering step further comprises the step of creating a registration identifier.

**7.** The method of claim 6, wherein said registering step between said user, U, and said at least one of said one or more groups, $G_i$, further comprises the step of creating a registration identifier, $(G_i, S_i)$, where $(S_i = g^{s_i})$, g is a randomly generated number and $s_i$ is obtained as follows:

$$s_i = x_i h - k_i h G \bmod (p-1).$$

**8.** The method of claim 1, wherein said user identity and membership are verified if:

$$G^G g^{V(r,s)} \stackrel{?}{=} \prod_{i=1}^{l} ID_i g^r \text{ , mod p.}$$

wherein said user is identified by an identifier, $ID_i$, equal to $g^{x_i h}$ mod p, said one or more groups are identified by an identifier, $G_i$, equal to $g^{k_i h}$ ,

$$V(r,s) = \sum_{i=1}^{l} s_i + r \text{ ,}$$

r is a randomly selected wrap value, mod p, g and $x_i$ are randomly generated numbers, h is a hash function on a random number concatenated with user information and $s_i$ is obtained as follows:

$$s_i = x_i h - k_i h G \bmod (p-1).$$

**9.** The method of claim 1, wherein said verifying computations are performed in a single operation based on the El Gomal public key algorithm.

**10.** The method of claim 1, wherein said user information is stored on a smart card that provides tamper-resistant features.

**11.** The method of claim 1, wherein said user information is stored in a memory of a computer.

**12.** The method of claim 1, wherein a user that satisfies said verifying computations is allowed to access a plurality of groups.

**13.** A method for authenticating a user to one or more groups, said method comprising the steps of:

verifying an identity of said user; and
verifying a membership of said user with said one or more groups, wherein said verifying steps are performed using a single operation.

**14.** The method of claim 13, further comprising the step of registering said user with at least one of said one or more groups.

**15.** The method of claim 14, wherein said registering step further comprises the step of said user and said at least one of said one or more groups exchanging a respective identifier.

**16.** The method of claim 15, wherein said user identifier is expressed as follows:

$$ID_i = g^{x_i h} \bmod p,$$

where g and $x_i$ are randomly generated numbers, and h is a hash function on a random number concatenated with information of said user, U.

**17.** The method of claim 15, wherein said identifier of said at least one of said one or more groups is expressed as follows:

$$G_i = g^{k_i h} \bmod p,$$

where g and $k_i$ are randomly generated numbers, and h is a hash function on a random number concatenated with information of said user, U.

**18.** The method of claim 13, wherein said single operation is expressed as:

$$G^G g^{V(r,s)} \stackrel{?}{=} \prod_{i=1}^{l} ID_i g^r \text{ , mod p,}$$

and wherein said user is identified by an identifier, $ID_i$, equal to $g^{x_i h}$ mod p, said one or more groups are identified by an identifier, $G_i$, equal to $g^{k_i h}$ ,

$$V(r,s) = \sum_{i=1}^{l} s_i + r \text{ ,}$$

r is a randomly selected wrap value, mod p, g and $x_i$ are randomly generated numbers, h is a hash function on a random number concatenated with user information and $s_i$ is obtained as follows:

$$s_i = x_i h - k_i hG \bmod (p-1).$$

**19.** The method of claim 13, wherein said single operation is based on the El Gomal public key algorithm.

**20.** The method of claim 13, wherein said single operation processes user information stored on a smart card that provides tamper-resistant features.

**21.** The method of claim 13, wherein said single operation processes user information stored in a memory of a computer.

**22.** A system for authenticating a user to one or more groups, said system comprising:

a memory that stores computer-readable code; and
a processor operatively coupled to said memory, said processor configured to implement said computer-readable code, said computer-readable code configured to:

verify an identity of said user; and
verify a membership of said user with said one or more groups,

wherein said verifying computations are performed substantially simultaneously using user information stored in a computer file associated with said user.

**23.** An article of manufacture for authenticating a user to one or more groups, comprising:

a computer readable medium having computer readable code means embodied thereon, said computer readable program code means comprising:

a step to verify an identity of said user; and
a step to verify a membership of said user with said one or more groups, wherein said verifying computations are performed substantially simultaneously using user information stored in a computer file associated with said user.

**24.** A system for authenticating a user to one or more groups, said method comprising the steps of:

a memory that stores computer-readable code; and
a processor operatively coupled to said memory, said processor configured to implement said computer-readable code, said computer-readable code configured to:

verify an identity of said user; and
verify a membership of said user with said one or more groups, wherein said verifying steps are performed using a single operation.

**25.** An article of manufacture for authenticating a user to one or more groups, comprising:

a computer readable medium having computer readable code means embodied thereon, said computer readable program code means comprising:

a step to verify an identity of said user; and
a step to verify a membership of said user with said one or more groups, wherein said verifying steps are performed using a single operation.

FIG. 1

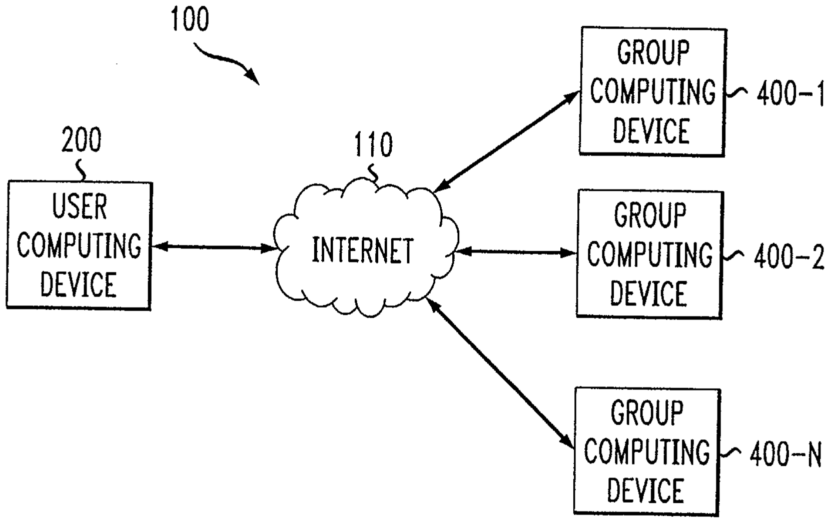
100
200
USER COMPUTING DEVICE
110
INTERNET
GROUP COMPUTING DEVICE
400-1
GROUP COMPUTING DEVICE
400-2
GROUP COMPUTING DEVICE
400-N

FIG. 2

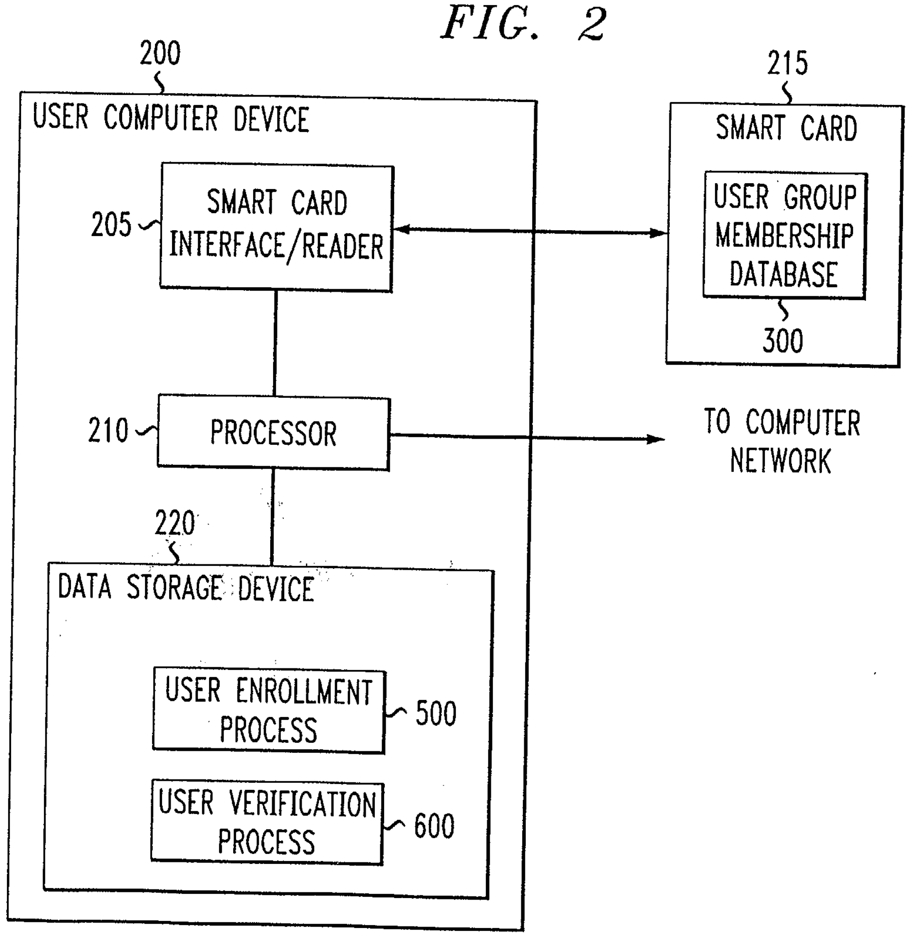
200
USER COMPUTER DEVICE
205
SMART CARD INTERFACE/READER
210
PROCESSOR
220
DATA STORAGE DEVICE
USER ENROLLMENT PROCESS
500
USER VERIFICATION PROCESS
600
215
SMART CARD
USER GROUP MEMBERSHIP DATABASE
300
TO COMPUTER NETWORK

*FIG. 3*

USER GROUP MEMBERSHIP DATABASE - 300

| | GROUP IDENTIFIER (320) | $X_i$ (325) | $G_i$ (330) | $S_i$ (335) |
|---|---|---|---|---|
| 301 | 0001 | | | |
| 302 | 0002 | | | |
| 303 | 0003 | | | |
| | ⋮ | | | |
| 305 | 000N | | | |

| USER VALUES | |
|---|---|
| h | |
| G | |
| S | |
| p | |
| g | |

*FIG. 4*

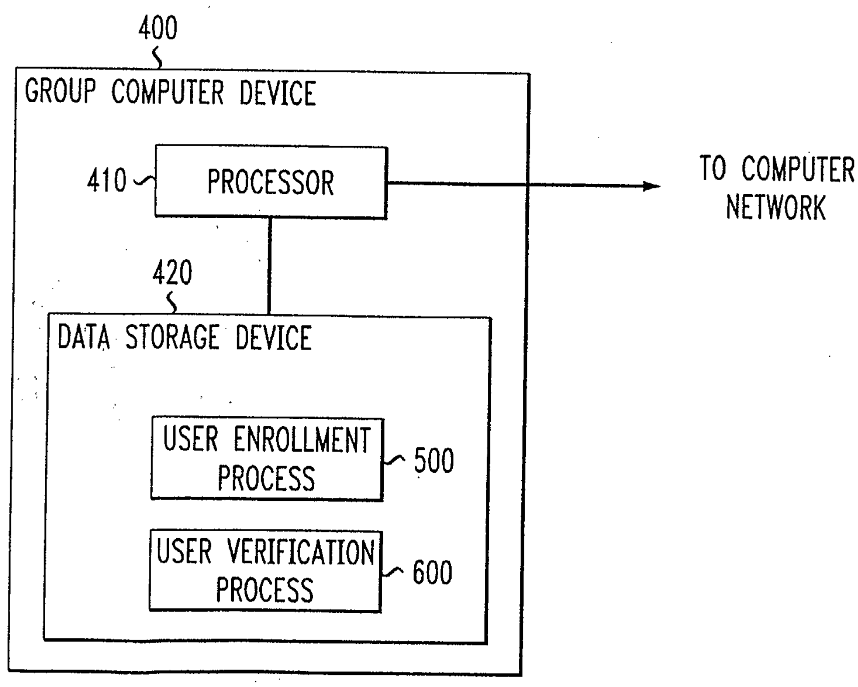

FIG. 5

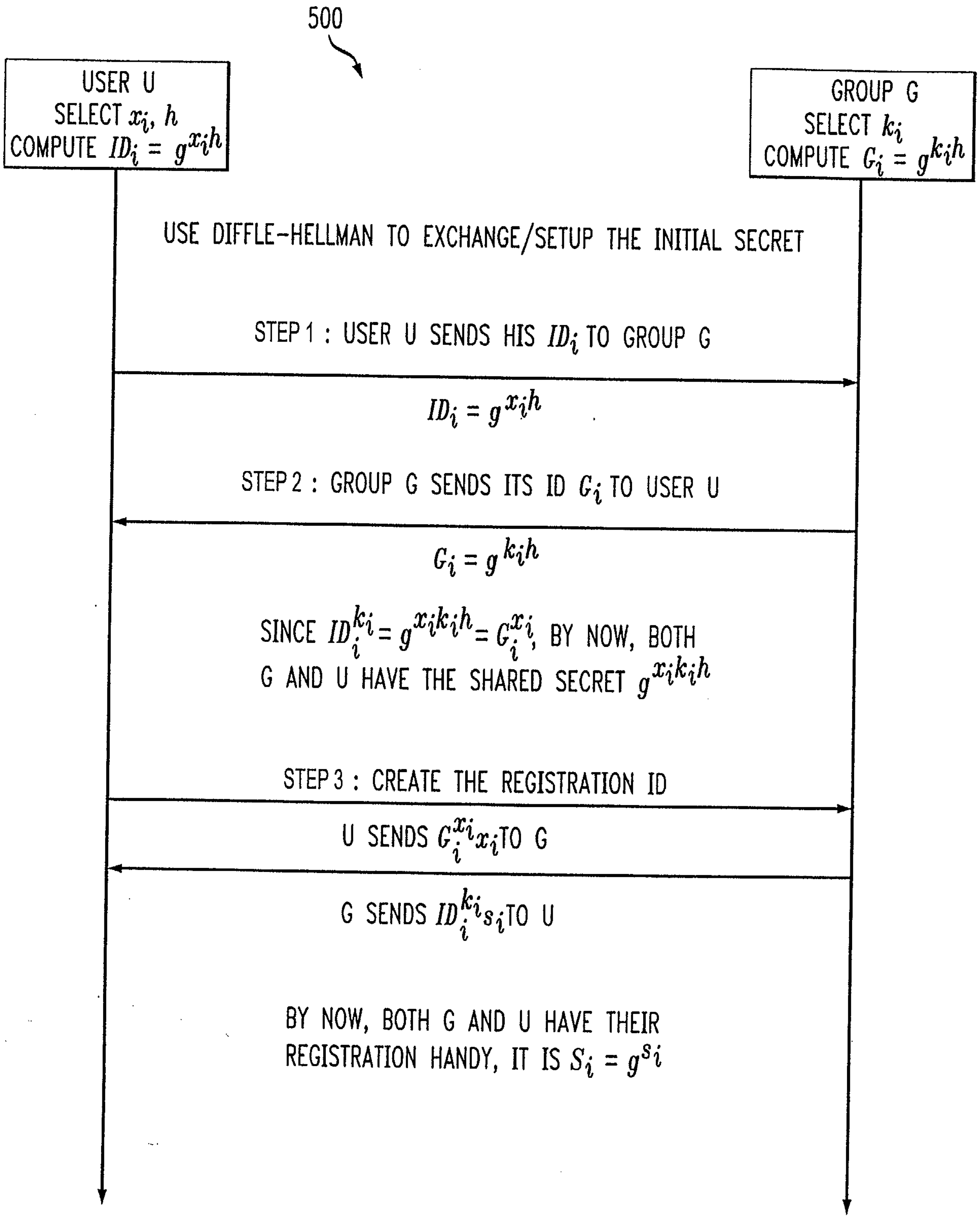
500
USER U
SELECT $x_i$, $h$
COMPUTE $ID_i = g^{x_i h}$
GROUP G
SELECT $k_i$
COMPUTE $G_i = g^{k_i h}$
USE DIFFLE-HELLMAN TO EXCHANGE/SETUP THE INITIAL SECRET
STEP 1 : USER U SENDS HIS $ID_i$ TO GROUP G
$ID_i = g^{x_i h}$
STEP 2 : GROUP G SENDS ITS ID $G_i$ TO USER U
$G_i = g^{k_i h}$
SINCE $ID_i^{k_i} = g^{x_i k_i h} = G_i^{x_i}$, BY NOW, BOTH
G AND U HAVE THE SHARED SECRET $g^{x_i k_i h}$
STEP 3 : CREATE THE REGISTRATION ID
U SENDS $G_i^{x_i} x_i$ TO G
G SENDS $ID_i^{k_i} s_i$ TO U
BY NOW, BOTH G AND U HAVE THEIR
REGISTRATION HANDY, IT IS $S_i = g^{s_i}$

*FIG. 6*

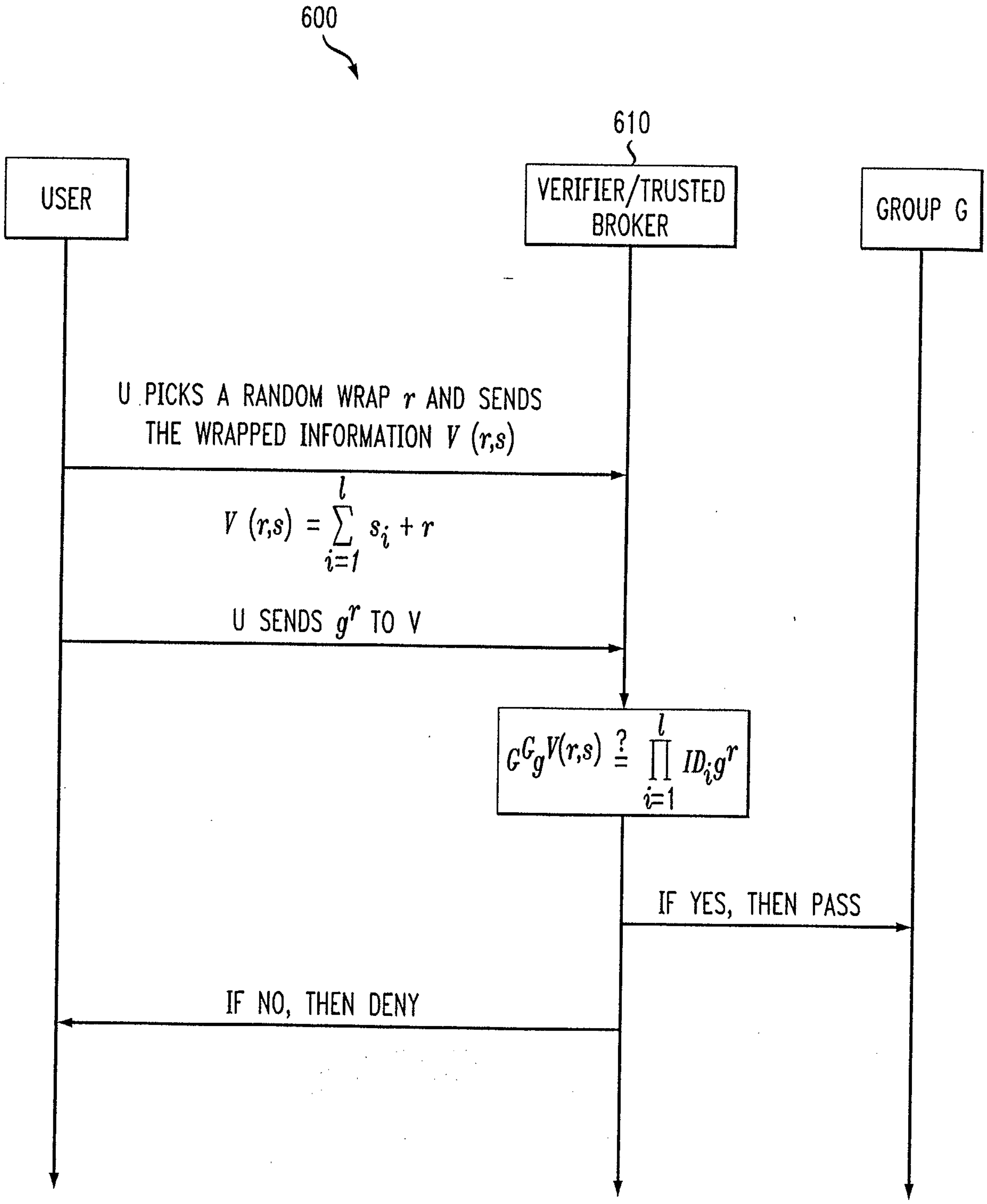
600
610
USER
VERIFIER/TRUSTED BROKER
GROUP G
U PICKS A RANDOM WRAP r AND SENDS THE WRAPPED INFORMATION V (r,s)
$V(r,s) = \sum_{i=1}^{l} s_i + r$
U SENDS $g^r$ TO V
$G^{G_g V(r,s)} \stackrel{?}{=} \prod_{i=1}^{l} ID_i g^r$
IF YES, THEN PASS
IF NO, THEN DENY